# EUROPEAN PATENT SPECIFICATION

(11) **EP 2 897 233 B1**
(45) Date of publication and mention of the grant of the patent: **01.03.2017**
(21) Application number: 15151037.7
(22) Date of filing: 14.01.2015
(51) Int. Cl.: H01R 13/52, H01R 4/70, H02G 15/013

(54) **Cable connector protector**
Kabelverbinderschutzvorrichtung
Protecteur de connecteur de câble

(30) Priority: 21.01.2014 FI 20145052
(43) Date of publication of application: 22.07.2015
(73) Proprietor: Trelleborg Industrial Products Finland OY, 38300 Sastamala (FI)
(72) Inventor: Lehtonen, Joni, 32740 Sastamala (FI)
(74) Representative: Papula Oy

(56) References cited:
- EP-A1- 1 592 104
- US-A1- 2008 268 687
- US-A1- 2012 090 876
- US-A1- 2012 285 741

## Description

### FIELD OF THE INVENTION

The invention relates to protecting longitudinal objects such as cable connectors. More particularly the invention relates to an enclosure for a cable to an apparatus interconnection.

### BACKGROUND OF THE INVENTION

Cable connectors are used in harsh environments, for example in telecommunication installations, industrial or marine applications. Cables are run into the installation cabinet or a similar housing by connectors, which may be protected against the conditions as such. The cable to an apparatus interconnection may still provide a possible leak route for fluids or other environmental contaminants. Therefore additional protectors for the cable to an apparatus interconnection are needed.

A typical problem for cable connector protectors according to the prior art is insufficient sealing. The protector must be tightened to the cable to an apparatus interconnection in order to compress the sealing. To ensure the sealing, prior art solutions have resulted in a complicated operation at the installation site. For example in telecommunication installation there may be several cables to be connected, often in an uncomfortable location. Easier operation improves the overall quality of the installation and, in the example of telecommunications, improves the connection and maintenance.

US2012/090876 discloses an enclosure for protecting a cable connection. The enclosure includes a sealing member contained within an inner shell. The sealing member is secured around the cable connection by slideably engaging a rigid outer shell over the inner shell. The inner shell has an external topography defining an inner shell profile and wherein the outer shell has an internal topography defining an outer shell profile such that the outer shell profile is similar to the inner shell profile.

### SUMMARY

The purpose of the invention is to remove or at least alleviate the aforementioned problems. In particular the purpose of the invention is to present a new enclosure for a cable to an apparatus interconnection. The invention discloses an enclosure for a cable to an apparatus interconnection, comprising: an inner member comprising a sealing portion configured to be positioned over a cable connector and a portion of the cable; and a shell member configured to slidably engage over the inner member. According to the invention the inner member comprises a grip area facing the shell member; the shell member comprises a tightening means for attaching to the grip area of the inner member; and the shell member is configured to exert a compression force on the inner member when moving the tightening means causes the shell member to move along the line of the cable towards the apparatus, when the inner member is positioned close to the apparatus and touches the apparatus.

In one exemplary embodiment the inner surface of the shell member comprises a first guiding means that is configured to interact with a second guiding means of the outer surface of the inner member, wherein the first and the second guiding means define the orientation of the shell member slidably engaging over the inner member.

In one exemplary embodiment the shell member comprises a first shell portion and a second shell portion that are connected by a hinge along a first longitudinal edge of the first shell portion and a first longitudinal edge of the second shell portion.

In one exemplary embodiment the shell member comprises a closing mechanism for closing a second longitudinal edge of the first shell portion onto a second longitudinal edge of the second shell portion.

In one exemplary embodiment the tightening means is lockable to the compressed position. In one exemplary embodiment the tightening means comprises a lever, wherein the lever is configured to attach to the grip area of the inner member and turning the lever causes the shell member to exert the compression force on the inner member. In another exemplary embodiment the tightening means comprises a pinion, wherein the pinion is configured to attach to the grip area of the inner member and moving a locking plate along the line of the cable towards the apparatus causes the pinion to roll into a slot, causing the shell member to exert the compression force on the inner member. In both of these embodiments the tightening means allows the operation without any additional tools required. The force required to tighten the shell member over the inner member is relatively small, wherein the tightening can be made by hand. In one exemplary embodiment the closing mechanism on the shell member is openable.

In one exemplary embodiment the inner member comprises at least two portions wherein the first portion of the inner member and the second portion of the inner member are longitudinally separable. The inner member is openable by separating the two portions. The structure is removable from the connector without leaving any residues of the sealing material in the connector.

In one exemplary embodiment the inner member and the shell member form an integral object in an open position.

In one exemplary embodiment the outer portion of the inner member is made of a hard material and the sealing portion is made of an elastic material.

The embodiments of the invention described hereinbefore may be used in any combination with each other. Several of the embodiments may be combined together to form a further embodiment of the invention. The device to which the invention is related may comprise at least one of the embodiments of the invention described hereinbefore. It is to be understood that any of the above embodiments or modifications can be applied singly or in combination to the respective aspects to which they refer, unless they are explicitly stated as excluding alternatives.

Benefits of the present invention are enabling the sealing compression from several directions over the cable, the connector and the apparatus housing. This improves the sealing effect as the compression is distributed to multiple positions. The installation procedure of the enclosure is simple and does not require many installation steps.

The arrangement is openable, thus improving the maintenance of the connector. Several solutions according to prior art comprise a sealing gel, mastic, tape or a similar solution that sticks to the connector and is difficult to remove during the maintenance. The design of the inner portion can be made such that the space left around the cable and/or the connector is minimal. The sealing is easier as thermal variations do not affect the small amount of air trapped inside the enclosure, causing a pumping effect.

The compressing position wherein the shell member is tightened over the inner member may be altered. The grip area of the inner member may allow different positions where the tightening movement starts.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 is an illustration of an exemplary embodiment comprising one portion of the inner member;
Fig. 2 is an illustration of the exemplary enclosure in an opened position;
Figs. 3a-3d are exemplary illustrations of the tightening means applying a lever; and
Figs. 4a-4d are exemplary illustrations of the tightening means applying a locking plate.

### DETAILED DESCRIPTION

Reference will now be made in detail to the exemplary embodiments of the present invention, examples of which are illustrated in the accompanying drawings.

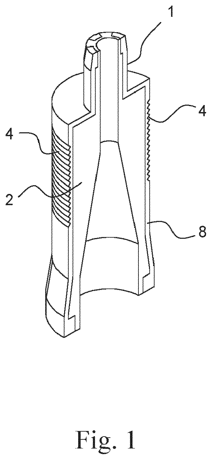

Figure 1 discloses one example of the inner member 1. In this example the inner member 1 consists of two halves, wherein the first portion 6 and the second portion 7 of the inner member 1 are longitudinally separable along the line of the cable. Different configurations to divide the inner member 1 are possible, for example edges of the first portion 6 and the second portion 7 may comprise forms that guide them to fit together as a single member. Examples of such forms are guide pins, slots, grooves or serrated edges. The inner member 1 has an outer portion 8 that is made of a hard material such as plastic, and the sealing portion 2 is made of an elastic material. Examples of elastic materials are rubber or thermoplastic elastomer. In one embodiment the thermoplastic elastomer is halogen free, thereby improving the safety characteristics by reducing the produced toxic gases when exposed to flame.

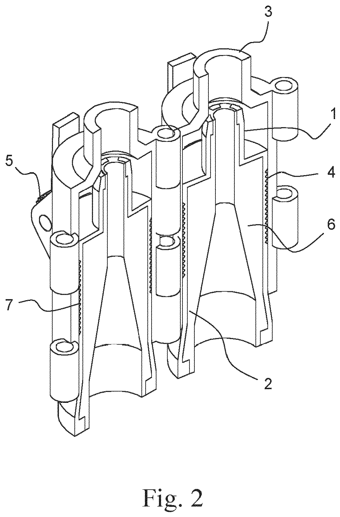

Figure 2 illustrates the enclosure in a fully opened position comprising two halves of the inner member 1 inside the shell member 3. The outer portion 8 of the inner member 1 comprises a grip area 4 configured to face the inner member of the shell member 3. The grip area 4 comprises for example grooves positioned transversely, or the area 4 may be roughened to improve the grip. In one example the grip area comprises a material that resists slippage of the tightening means 5. The grip area may exist only partially on the inner member 1 or, according to one embodiment, the grip area covers the whole outer surface of the inner member 1. The inner surface of the shell member 3 comprises a first guiding means configured to interact with a second guiding means of the outer surface of the inner member 1. Such a guiding means is for example a form guiding the inner member 1 and the shell member 3 to slidably engage together.

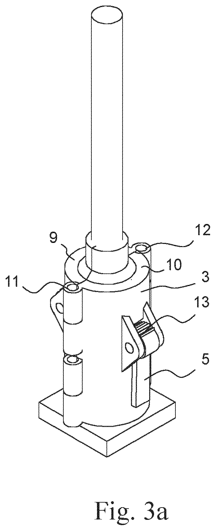

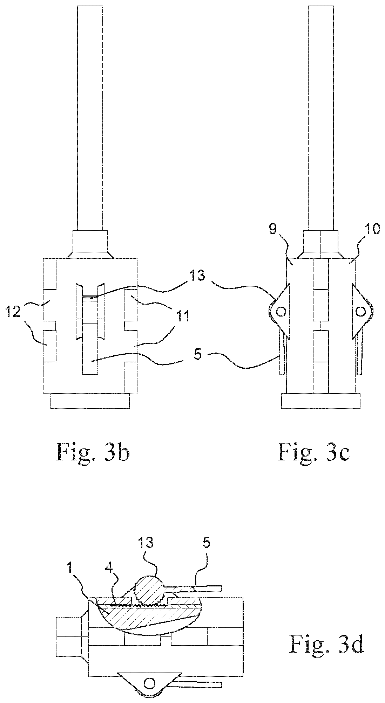

Figures 3a-3d illustrate a shell member 3 that is configured to be positioned over the inner member 1. The shell member 3 is openable by dividing the shell member into two portions, the first shell portion 9 and the second shell portion 10 that are connected by a hinge 11 along a first longitudinal edge of the first shell portion 9 and a first longitudinal edge of the second shell portion 10. The shell member 3 also comprises a closing mechanism 12. The closing mechanism 3 is for example a hinge pin, wherein either or both of the longitudinal edges 9, 10 may be openable and may operate as the hinge 11.

In this example the tightening means 5 is a lever. The bottom part of the lever 5 is configured to be a pinion 13 fitting in the grooves of the grip area 5, wherein the pinion 13 of the lever 5 extends though the shell member 3. In the assembly the inner member 1 has been positioned over the cable to an apparatus interconnection, to the place where the cable connector is fully inserted, and the inner member has been positioned close to the apparatus and touches the apparatus. The shell member 3 is closed over the cable and slid towards the inner member 1. The pinion 13 meets the groove 4 of the inner member and in some cases may be slid still further to click into the groove. The lever 5 connected to the pinion 13 is turned to move the shell member slidably along the line of the cable closer to the apparatus, thereby exerting a compressing force on the inner member 1. The inner member 1 is compressed into the cable to an apparatus interconnection and to a portion of the cable. As a result of the mechanical components and an axial force to compress the sealing portion 2, the arrangement creates a seal to the interconnection.

Figure 3d illustrates a cross sectional view of the lever and pinion configuration 5. The lever 5 and the pinion are attached to the shell member. The lever 5 may be locked into the fully compressed position. The first and the second shell portion may comprise a lever and pinion configuration 5, wherein the shell member comprises two tightening means 5.

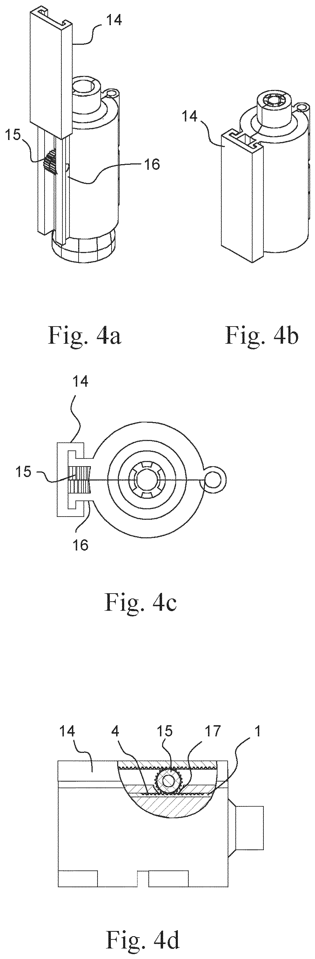

Figures 4a - 4d illustrate another embodiment of the tightening means 5 and the closing mechanism. In this example the inner member 1 is similar to the previous example, wherein the grip area 4 comprises grooves. The shell member 3 comprises a closing mechanism at the opposite side to the hinge 11. Grooves 16 are configured to fit into a locking plate 14. The locking plate 14 comprises u-shaped edges that can be pushed onto the closed shell member 3 grooves 16. A pinion 15 is configured to slide in the grooves 16 and pushed in the direction of the apparatus by the locking plate 14 by the tightening and closing motion. The pinion 15 is configured to fit in the grooves 4 of the inner member 1, causing the compressing interaction between the shell member 3 and the inner member 1.

The shell member 3 is moved in relation to the inner member 1 by pushing the locking plate 14 along the grooves in the shell member 3. The locking plate 14 has grooves facing the shell member, said grooves fitting the pinion 15. The movement of the locking plate is configured to stop at a slot 17 configured to the groove 16 of the shell member 3, wherein the axle of the pinion 15 drops into the slot 17 when the pinion 15 is pushed to the fully compressed position.

It is obvious to a person skilled in the art that with the advancement of technology, the basic idea of the invention may be implemented in various ways. The invention and its embodiments are thus not limited to the examples described above; instead, they may vary within the scope of the claims.

## Claims

1. An enclosure for a cable to an apparatus interconnection, comprising;
an inner member (1) comprising a sealing portion (2) configured to be positioned over a cable connector; and
a shell member (3) configured to slidably engage over the inner member (1), **characterized in that**
the inner member (1) comprises a grip area (4) facing the shell member (3);
the shell member (3) comprises a tightening means (5) for attaching to the grip area (4) of the inner member (1); and
the shell member (3) is configured to exert a compression force on the inner member (1) when moving the tightening means (5) causes the shell member (3) to move along the line of the cable towards the apparatus, when the inner member (1) is positioned close to the apparatus and touches the apparatus.

2. The enclosure according to claim 1, **characterized in that** the inner surface of the shell member (3) comprises a first guiding means that is configured to interact with a second guiding means of the outer surface of the inner member, wherein the first and the second guiding means define the orientation of the shell member (3) slidably engaging over the inner member.

3. The enclosure according to claim 1 or claim 2, **characterized in that** the shell member (3) comprises a first shell portion (9) and a second shell portion (10) that are connected by a hinge (11) along a first longitudinal edge of the first shell portion (9) and a first longitudinal edge of the second shell portion (10).

4. The enclosure according to any of the claims 1 to 3, **characterized in that** the shell member (3) comprises a closing mechanism (12) for closing a second longitudinal edge of the first shell portion (9) onto a second longitudinal edge of the second shell portion (10).

5. The enclosure according to any of the claims 1 to 4, **characterized in that** the tightening means (5) is lockable to the compressed position.

6. The enclosure according to any of the claims 1 to 5, **characterized in that** the tightening means (5) comprises a lever, wherein the lever is configured to attach to the grip area (4) of the inner member (1) and turning the lever causes the shell member (3) to exert the compression force on the inner member.

7. The enclosure according to any of the claims 1 to 5, **characterized in that** the tightening means (5) comprises a pinion (15), wherein the pinion (15) is configured to attach to the grip area (4) of the inner member (1) and moving a locking plate (14) along the line of the cable towards the apparatus causes the pinion (15) to roll into a slot (27), causing the shell member (3) to exert the compression force on the inner member (1).

8. The enclosure according to any of the claims 1 to 7, **characterized in that** the closing mechanism on the shell member (3) is openable.

9. The enclosure according to any of the claims 1 to 8, **characterized in that** the inner member (1) comprises at least two portions wherein the first portion (6) of the inner member (1) and the second portion (7) of the inner member (1) are longitudinally separable.

10. The enclosure according to any of the claims 1 to 9, **characterized in that** the inner member (1) and the shell member (3) form an integral object in an open position.

11. The enclosure according to any of the claims 1 to 10, **characterized in that** the outer portion (8) of the inner member (1) is made of a hard material and the sealing portion (2) is made of an elastic material.

## Patentansprüche

1. Kapselung für ein Kabel zu einer Geräteverschaltung, umfassend:
ein inneres Element (1) mit einem Dichtungsteil (2), das gestaltet ist, so dass es über einem Kabelverbinder angeordnet wird; und
ein Hüllenelement (3), das gestaltet ist, so dass es verschiebbar über das innere Element (1) greift, **dadurch gekennzeichnet, dass**
das innere Element (1) einen Griffbereich (4) umfasst, der dem Hüllenelement (3) gegenüberliegt; wobei
das Hüllenelement (3) eine Festzieheinrichtung (5) zum Befestigen an dem Griffbereich (4) des inneren Elements (1) umfasst; und
das Hüllenelement (3) gestaltet ist, so dass es eine Druckkraft auf dem inneren Element (1) ausübt, wenn das Bewegen der Festzieheinrichtung (5) bewirkt, dass sich das Hüllenelement (3) längs der Linie des Kabels auf das Gerät zu bewegt, wenn das innere Element (1) nahe an dem Gerät positioniert ist und das Gerät berührt.

2. Kapselung nach Anspruch 1, **dadurch gekennzeichnet, dass** die Innenfläche des Hüllenelements (3) ein erstes Führungsmittel aufweist, das gestaltet ist, so dass es mit einem zweiten Führungsmittel der Außenfläche des inneren Elements zusammenwirkt, wobei das erste und das zweite Führungsmittel die Ausrichtung des Hüllenelements (3) bilden, das verschiebbar über das innere Element greift.

3. Kapselung nach Anspruch 1 oder Anspruch 2, **dadurch gekennzeichnet, dass** das Hüllenelement (3) ein erstes Hüllenteil (9) und ein zweites Hüllenteil (10) umfasst, die durch ein Scharnier (11) entlang einer ersten Längskante des ersten Hüllenteils (9) und einer ersten Längskante des zweiten Hüllenteils (10) verbunden sind.

4. Kapselung nach einem der Ansprüche 1 bis 3, **dadurch gekennzeichnet, dass** das Hüllenelement (3) einen Schließmechanismus (12) zum Schließen einer zweiten Längskante des ersten Hüllenteils (9) auf einer zweiten Längskante des zweiten Hüllenteils (10) umfasst.

5. Kapselung nach einem der Ansprüche 1 bis 4, **dadurch gekennzeichnet, dass** die Festzieheinrichtung (5) in der zusammengedrückten Position feststellbar ist.

6. Kapselung nach einem der Ansprüche 1 bis 5, **dadurch gekennzeichnet, dass** die Festzieheinrichtung (5) einen Hebel umfasst, wobei der Hebel gestaltet ist, den Griffbereich (4) des inneren Elements (1) zu befestigen und Drehen des Hebels bewirkt, dass das Hüllenelement (3) die Druckkraft auf das innere Element ausübt.

7. Kapselung nach einem der Ansprüche 1 bis 5, **dadurch gekennzeichnet, dass** die Festzieheinrichtung (5) ein Ritzel (15) umfasst, wobei das Ritzel (15) gestaltet ist, so dass der Griffbereich (4) des inneren Elements (1) befestigt wird und Bewegen einer Feststellplatte (14) entlang der Linie des Kabels auf das Gerät zu bewirkt, dass das Ritzel (15) in einen Schlitz (27) rollt, womit bewirkt wird, dass das Hüllenelement (3) die Druckkraft auf das innere Element (1) ausübt.

8. Kapselung nach einem der Ansprüche 1 bis 7, **dadurch gekennzeichnet, dass** der Schließmechanismus auf dem Hüllenelement (3) zu öffnen ist.

9. Kapselung nach einem der Ansprüche 1 bis 8, **dadurch gekennzeichnet, dass** das innere Element (1) mindestens zwei Teile umfasst, wobei das erste Teil (6) des inneren Elements (1) und das zweite Teil (7) des inneren Elements (1) in Längsrichtung trennbar sind.

10. Kapselung nach einem der Ansprüche 1 bis 9, **dadurch gekennzeichnet, dass** das innere Element (1) und das Hüllenelement (3) eine eingebaute Einheit in einer geöffneten Stellung bilden.

11. Kapselung nach einem der Ansprüche 1 bis 10, **dadurch gekennzeichnet, dass** das äußere Teil (8) des inneren Elements (1) aus einem harten Werkstoff hergestellt ist und das Dichtungsteil (2) aus einem elastischen Werkstoff hergestellt ist.

## Revendications

1. Enveloppe destinée à un câble d'interconnexion d'appareil, comprenant :
un élément intérieur (1) comprenant une partie d'étanchéité (2) conçue pour être placée sur un connecteur de câble ; et
un élément coquille (3) conçu pour coopérer de manière coulissante avec l'élément intérieur (1), **caractérisée en ce que**
l'élément intérieur (1) comprend une zone de préhension (4) faisant face à l'élément coquille (3) ;
l'élément coquille (3) comprend un moyen de serrage (5) prévu pour une fixation à la zone de préhension (4) de l'élément intérieur (1) ; et
l'élément coquille (3) est conçu pour exercer une force de compression sur l'élément intérieur (1) lorsque le déplacement du moyen de serrage (5) amène l'élément coquille (3) à se déplacer le long de la ligne du câble en direction de l'appareil, lorsque l'élément intérieur (1) est placé à proximité de l'appareil et touche l'appareil.

2. Enveloppe selon la revendication 1, **caractérisée en ce que** la surface intérieure de l'élément coquille (3) comprend un premier moyen de guidage qui est conçu pour interagir avec un second moyen de guidage de la surface extérieure de l'élément intérieur, les premier et second moyens de guidage définissant l'orientation de l'élément coquille (3) coopérant de manière coulissante avec l'élément intérieur.

3. Enveloppe selon la revendication 1 ou la revendication 2, **caractérisée en ce que** l'élément coquille (3) comprend une première partie (9) de coquille et une seconde partie (10) de coquille qui sont reliées par une charnière (11) le long d'un premier bord longitudinal de la première partie (9) de coquille et d'un premier bord longitudinal de la seconde partie (10) de coquille.

4. Enveloppe selon l'une quelconque des revendications 1 à 3, **caractérisée en ce que** l'élément coquille (3) comprend un mécanisme de fermeture (12) permettant de fermer un second bord longitudinal de la première partie (9) de coquille sur un second bord longitudinal de la seconde partie (10) de coquille.

5. Enveloppe selon l'une quelconque des revendications 1 à 4, **caractérisée en ce que** le moyen de serrage (5) peut être verrouillé dans la position comprimée.

6. Enveloppe selon l'une quelconque des revendications 1 à 5, **caractérisée en ce que** le moyen de serrage (5) comprend un levier, dans laquelle le levier est conçu pour être fixé à la zone de préhension (4) de l'élément intérieur (1), et le fait de tourner le levier amène l'élément coquille (3) à exercer la force de compression sur l'élément intérieur.

7. Enveloppe selon l'une quelconque des revendications 1 à 5, **caractérisée en ce que** le moyen de serrage (5) comprend un pignon (15), dans laquelle le pignon (15) est conçu pour être fixé à la zone de préhension (4) de l'élément intérieur (1), et le fait de déplacer une plaque de verrouillage (14) le long de la ligne du câble en direction de l'appareil amène le pignon (15) à rouler dans une fente (27), ce qui amène l'élément coquille (3) à exercer la force de compression sur l'élément intérieur (1).

8. Enveloppe selon l'une quelconque des revendications 1 à 7, **caractérisée en ce que** le mécanisme de fermeture situé sur l'élément coquille (3) peut être ouvert.

9. Enveloppe selon l'une quelconque des revendications 1 à 8, **caractérisée en ce que** l'élément intérieur (1) comprend au moins deux parties, dans laquelle la première partie (6) de l'élément intérieur (1) et la seconde partie (7) de l'élément intérieur (1) peuvent être séparées longitudinalement.

10. Enveloppe selon l'une quelconque des revendications 1 à 9, **caractérisée en ce que** l'élément intérieur (1) et l'élément coquille (3) forment un objet intégral dans une position ouverte.

11. Enveloppe selon l'une quelconque des revendications 1 à 10, **caractérisée en ce que** la partie extérieure (8) de l'élément intérieur (1) est constituée d'un matériau dur et **en ce que** la partie d'étanchéité (2) est constituée d'un matériau élastique.
